# EUROPÄISCHE PATENTSCHRIFT

(11) **EP 1 439 269 B1**
(45) Veröffentlichungstag und Bekanntmachung des Hinweises auf die Patenterteilung: **04.10.2006**
(21) Anmeldenummer: 04405009.4
(22) Anmeldetag: 06.01.2004
(51) Int. Cl.: E03D 11/14, E05D 3/02, E03C 1/32, F16B 7/18

(54) **Verbinder für die Befestigung von Montageprofilen der Sanitärtechnik sowie Traggestell mit einem solchen Verbinder**
Bracket for mounting profiles for sanitary installations and frame with such a bracket
Etrier d'ancrage pour profilés pour installations sanitaires et chassis avec un tel étrier

(30) Priorität: 14.01.2003 DE 20300469 U
(43) Veröffentlichungstag der Anmeldung: 21.07.2004
(73) Patentinhaber: GEBERIT TECHNIK AG, 8645 Jona (CH)
(72) Erfinder: Gut, René, 8855 Wangen (CH)
(74) Vertreter: Groner, Manfred

(56) Entgegenhaltungen:
- EP-A- 1 096 075
- AU-B- 600 471
- DE-C- 10 114 885
- DE-U- 9 407 526
- FR-A- 2 653 836

## Beschreibung

Die Erfindung betrifft einen Verbinder nach dem Oberbegriff des Anspruchs 1 sowie ein Traggestell mit einem solchen Verbinder. In der Sanitärtechnik werden insbesondere für die Unterputzmontage Traggestelle aus Hohlprofilstangen montiert. Diese Traggestelle werden in der Regel auf einen Gebäudeboden gestellt und an einer Gebäudewand befestigt. Zum Verbinden der Hohlprofilstangen sind Verbinder erforderlich, welche die Hohlprofilstangen miteinander verbinden. Ein solcher Verbinder ist beispielsweise in der EP 0 864 764 A des Anmelders offenbart. Mit diesem Verbinder können zwei Hohlprofilstangen rechtwinklig zueinander befestigt werden.

Die DE 101 14 885 C offenbart eine Einrichtung zum Einstellen der Distanz zwischen zwei Teilen. Die Einrichtung weist zwei Laschen auf, die jeweils an einem der beiden Teile anschraubbar sind. Über einen gebogenen Distanzbügel mit einem Langloch werden die beiden Laschen miteinander verbunden. Mit zwei Schraubverbindungen sind die Laschen verstellbar mit dem Bügel verbunden. Die Einrichtung eignet sich nicht als stabile Verbindung von Profilen eines Traggestells.

Die EP 1 096 075 A offenbart eine Wandhalterung zur Befestigung eines Montagegestells an einer Gebäudewand. Die Wandhalterung besitz eine Lasche, die an der Gebäudewand zu befestigen ist sowie einen hülsenförmigen Einsatz, der von einer Gewindeschraube durchsetzt ist und der in einer Öffnung des Montagegestells zu verankern ist.

Die FR 2 653 836 A betrifft eine Vorrichtung zum Verbinden von zwei Profilschienen und weist zwei Teile auf, die schwenkbar miteinander verbunden sind. Eines der Teile weist einen Zapfen auf, der in eine stirnseitige Öffnung eines Profils einzusetzen ist.

Die AU-600 471 B offenbart ein Gelenkband zur Befestigung einer Türe.

Insbesondere in der Badgestaltung werden zunehmend Sanitärartikel, wie beispielsweise Waschtische in einer Zimmerecke montiert. Dadurch ergeben sich wesentliche Vorteile für die Raumaufteilung und die Flächennutzung. Vielfach müssen hierbei nicht rechtwinklige Traggestelle montiert werden, die entsprechend unterschiedliche Winkel zwischen Hohlprofilen aufweisen. Bisher wurden solche nicht rechtwinkligen Verbindungen durch bauseitige Massnahmen erstellt, indem beispielsweise Blechwinkel entsprechend gebogen und verschraubt wurden. Solche Montagearbeiten sind jedoch sehr aufwendig.

Der Erfindung liegt die Aufgabe zugrunde, einen Verbinder der genannten Art zu schaffen, mit dem in einfacherer Weise und dennoch zuverlässig Hohlprofilstangen mit unterschiedlichen Winkeleinstellungen verbindbar sind und damit insbesondere Traggestelle für sanitäre Apparate erstellt werden können.

Die Aufgabe ist bei einem Verbinder gemäss Anspruch 1 gelöst.

Um zwei Profilstangen miteinander zu verbinden, wird jede Verbindungslasche mit einem der Hohlprofilstangen verbunden. Aufgrund der scharnierartigen Verbindung der Verbindungslaschen kann nun im Wesentlichen jeder Winkel zwischen den beiden Hohlprofilstangen eingestellt werden. Die beiden Hohlprofilstangen können beispielsweise rechtwinklig oder parallel zueinander verlaufen. Es ist auch ein Winkel grösser als 90° möglich. Die Laschen können beispielsweise jeweils mit einem Nutenstein mit einer der Hohlprofilstangen verbunden werden. Möglich ist auch eine Verbindung mit Selbstbohrschrauben. Es hat sich gezeigt, dass ein solcher Verbinder auch zum Verbinden einer Hohlprofilstange mit einer Gebäudewand geeignet ist.

Eine besonders kostengünstige Herstellung des Verbinders ergibt sich dann, wenn gemäss einer Weiterbildung der Erfindung die beiden Verbindungslaschen im Wesentlichen gleich ausgebildet sind. Insbesondere sind die beiden Verbindungslaschen bei etwa paralleler Ausrichtung drehsymmetrisch zueinander angeordnet.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine räumliche Ansicht eines erfindungsgemässen Verbinders,
- Figur 2: eine Ansicht des Verbinders gemäss Figur 1 und ein Abschnitt einer Hohlprofilstange, die mit dem Verbinder verbunden ist,
- Figur 3: eine weitere räumliche Ansicht des Verbinders,
- Figur 4: eine weitere Ansicht des Verbinders mit den Verbindungslaschen in der Anordnung gemäss Figur 3,
- Figur 5: eine räumliche Ansicht des Verbinders, wobei die Verbindungslaschen parallel zueinander ausgerichtet sind,
- Figur 6: eine weitere Ansicht des verbinders, wobei die Verbindungslaschen gemäss Figur 5 ausgerichtet sind,
- Figur 7: schematisch eine Ansicht eines Traggestells, montiert in einer Raumecke,
- Figuren 8 bis 12: schematisch einige Verbindungspositionen des erfindungsgemässen Verbinders.

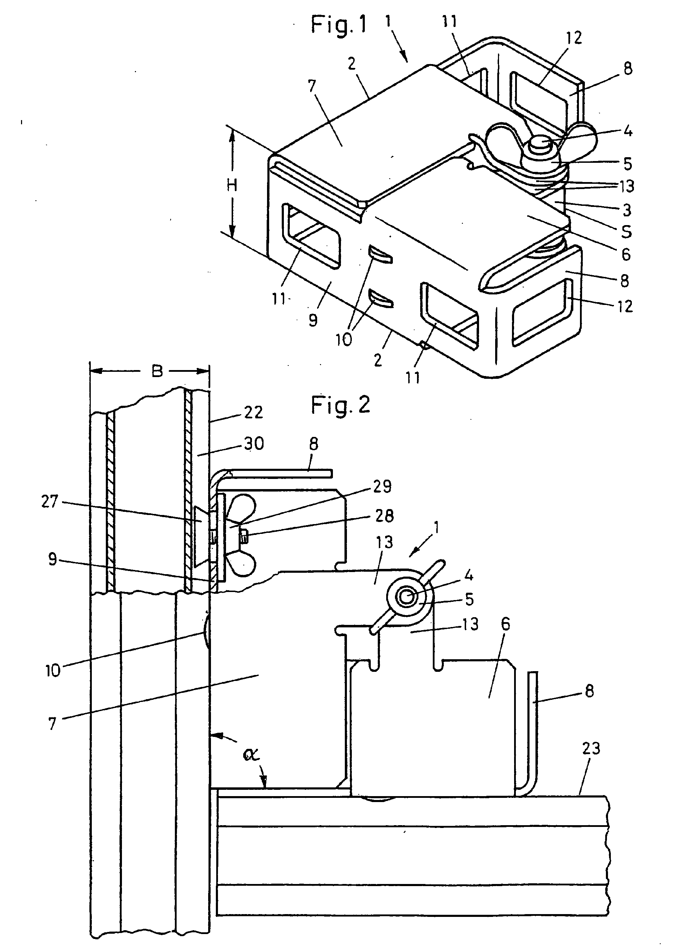

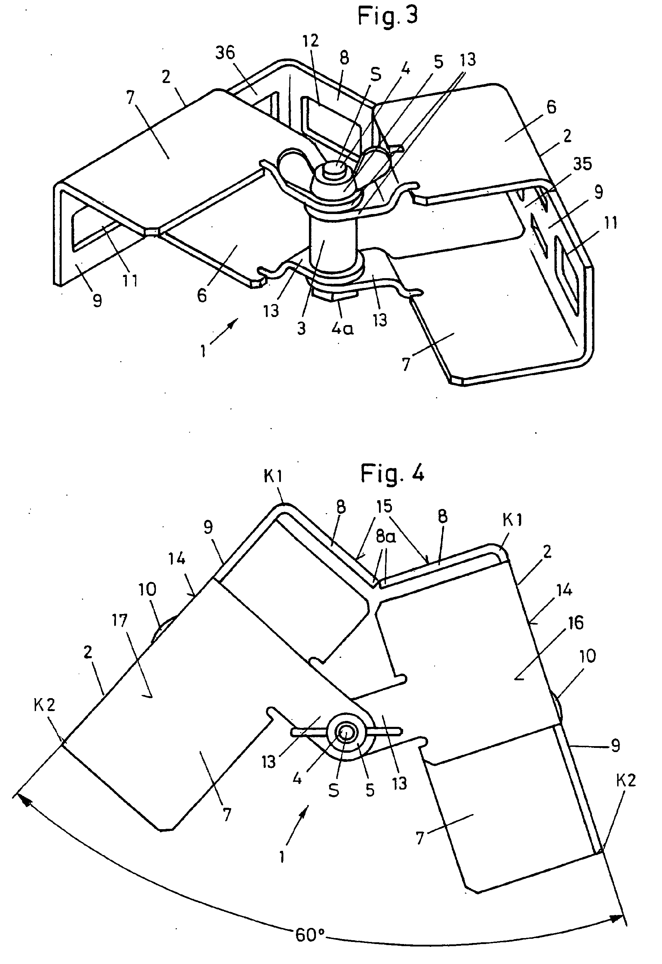

Der in den Figuren mit 1 bezeichnete Verbinder weist zwei Verbindungslaschen 2 auf, die abgebogene Blechformteile sind. Diese Verbindungslaschen 2 sind gleich ausgebildet und gegeneinander um ein Scharnier S begrenzt verschwenkbar. Jede Verbindungslasche 2 weist zwei parallel und im Abstand zueinander verlaufende und nach innen abgebogene Scharnierplatten 13 auf, die jeweils eine hier nicht gezeigt Bohrung zur Aufnahme eines Gewindebolzens 4 besitzt. Der Gewindebolzen 4 weist als Anschlag an einem Ende einen Kopf 4a auf und am anderen Ende ist eine Flügelmutter 5 aufgeschraubt. Wie beispielsweise die Figur 3 zeigt, sind die Scharnierplatten 13 der beiden Verbindungslaschen 2 achsial versetzt und zwischen den inneren Scharnierplatten 13 ist eine Hülse 3 angeordnet, durch welche der Gewindebolzen 4 hindurchgreift. Durch die genannten Teile ist das Scharnier S gebildet, das ein Verschwenken der Verbindungslaschen 2 zueinander ermöglicht. Dadurch sind die in den Figuren 1 und 3 bzw. 2 und 4 gezeigten Anschlagposition sowie alle Zwischenpositionen möglich. Der Schwenkbereich zwischen diesen beiden Anschlagpositionen ist wesentlich grösser als 90°, vorzugsweise grösser als 120°. In der gezeigten Ausführung beträgt dieser Schwenkbereich 150°.

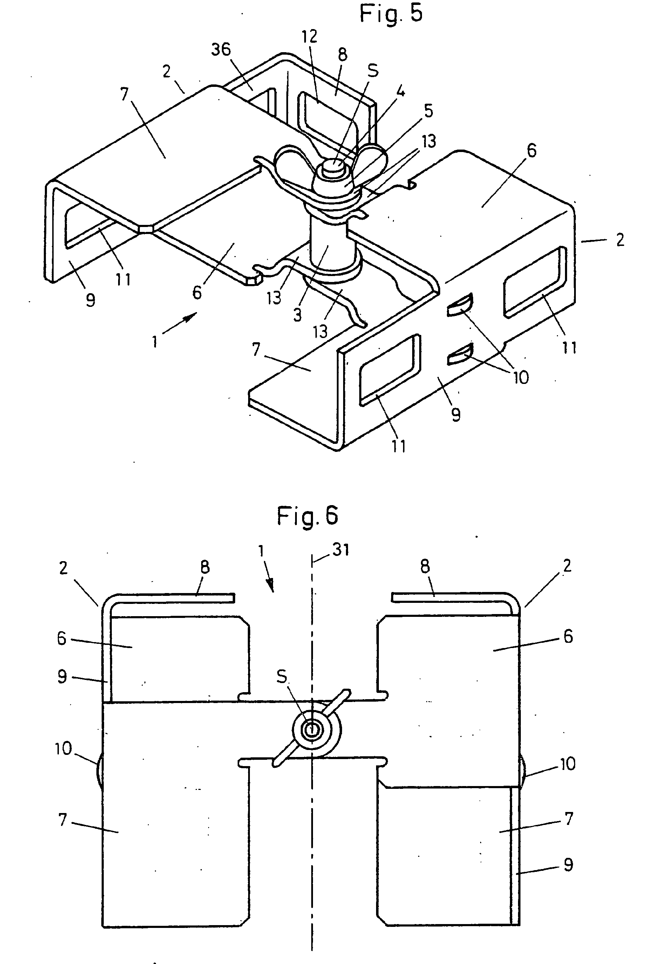

In den Figuren 5 und 6 sind die beiden Verbindungslaschen 2 so ausgerichtet, dass Seitenwandungen 9 der Verbindungslaschen 2 parallel zueinander verlaufen. Die Verbindungslaschen 2 können gemäss Figur 6 durch eine Drehung um die strichpunktiert eingezeichnete Linie 31 zur Deckung gebracht werden. Die beiden Verbindungslaschen 2 sind somit drehsymmetrisch zueinander angeordnet. Die strichpunktierte Linie 31 geht hierbei durch die Mitte der Hülse 3.

Die beiden Verbindungslaschen 2 weisen jeweils eine Seitenwandung 9 auf, die zwei rechteckige und längliche Durchbrüche 11 und zwischen diesen zwei Führungsnocken 10 aufweist. Eine um 90° abgewinkelte Stirnwandung 8 ist ebenfalls mit einem rechteckigen und länglichen Durchbruch 12 versehen und bildet eine Kante K1, die parallel zur Achse des Scharniers S verläuft. Das andere Ende der Wandung 9 bildet eine weitere parallele Kante K2. Von der Wandung 9 ragen zwei ebenfalls um 90° abgewinkelte Wandungen 6 und 7 nach innen. Diese Wandungen 6 und 7 sind kürzer als die Wandung 9, sodass in Achsrichtung des Scharniers 7 gesehen Fenster 35 und 36 vorhanden sind, die bei der Anordnung gemäss Figur 1 jeweils durch eine Wandung 6 bzw. 7 der anderen Verbindungslasche geschlossen ist. Dadurch ist die in Figur 1 gezeigte Anordnung möglich, bei welcher die Wandungen 9 einen rechten Winkel α bilden, wie dies in Figur 2 gezeigt ist. Zwei Hohlprofilstangen 22 und 23 können damit im rechten Winkel miteinander verbunden werden. Die Verbindung erfolgt hier beispielsweise jeweils mit einem an sich bekannten Nutenstein 27, der in eine Längsnut einer Profilstange 22 bzw. 23 eingesetzt und mit einer Flügelmutter 29 gesichert ist. Ein Gewindebolzen 28 des Nutensteins 27 durchgreift hierbei einen Durchbruch 11. Grundsätzlich sind hier auch andere Verbindungen denkbar, beispielsweise mittels Selbstbohrschrauben. Ein Querschnitt durch diese Wandungen 9, 6 und 7 ist im Wesentlichen U-förmig. Die Wandung 9 bildet die im wesentlichen ebene Aussenseite 14, die Wandung 7 die ebene Aussenseite 17 und die Wandung 6 die ebene Aussenseite 16.

Die Figuren 3 und 4 zeigen die andere Anschlagstellung, bei welcher die Stirnwandungen 8 an Endkanten 8a aneinander angelegt sind. Die Wandungen 9 verlaufen hierbei in einem spitzen Winkel zueinander. Dieser Winkel beträgt in diesem Fall etwa 60°. Es sind hier aber auch kleinere oder grössere Winkel denkbar. Die Stirnwandungen 8 bilden jeweils eine ebene Stirnseite 15.

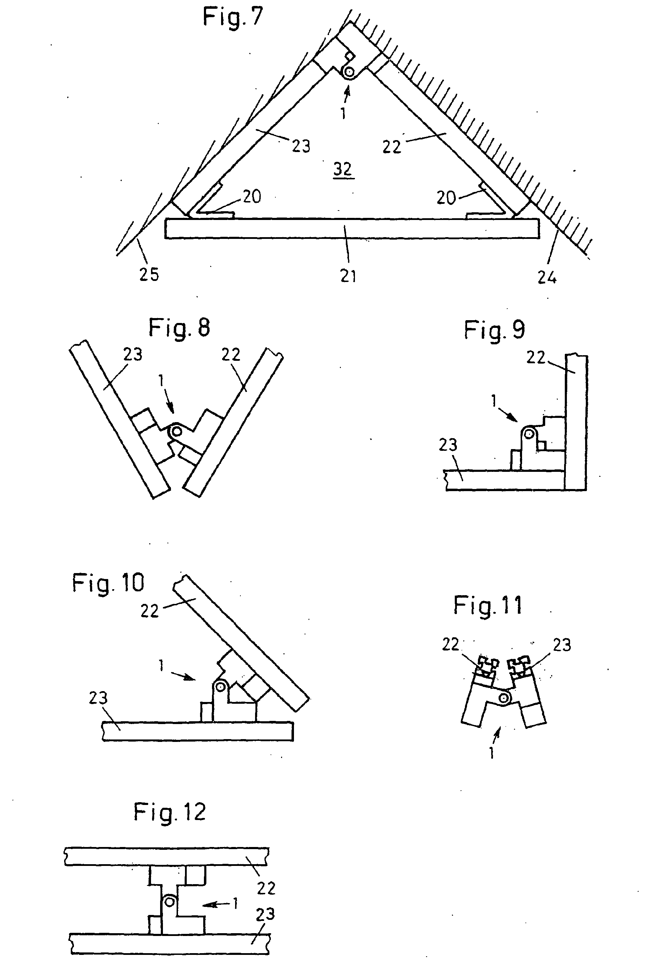

Die in den Figuren 5 und 6 gezeigte Anordnung der Verbindungslaschen 2 ist eine Zwischenstellung zwischen den oben genannten Anschlagpositionen, wobei die Wandungen 9 parallel zueinander verlaufen. Entsprechend verlaufen zwei miteinander verbundene Hohlprofilstangen 22 und 23 parallel zueinander, wie dies in Figur 12 gezeigt ist. Auch hier ist eine Verbindung jeweils mit einem Nutenstein 27 oder mit hier nicht gezeigten Selbstbohrschrauben möglich. Durch Anziehen der Flügelmutter 5 können die beiden Verbindungslaschen 2 in der eingestellten Ausrichtung gegeneinander fixiert werden. Dies erleichtert die Montage wesentlich, da durch eine solche Fixierung die miteinander verbundenen Hohlprofilstangen 22 und 23 die entsprechende Winkelstellung beibehalten.

Hohlprofilstangen 22 und 23 können zudem gemäss Figur 11 auch an den Stirnwandungen 8 befestigt werden. Hierzu werden die Durchbrüche 12 verwendet, durch welche beispielsweise jeweils ein Nutenstein 27 in eine entsprechende Nut 30 der Hohlprofilstange 22 bzw. 23 eingesetzt ist. Zudem ist eine Verbindung möglich, bei der eine Hohlprofilstange 22 an einer Wandung 9 und eine Hohlprofilstange 23 an einer Wandung 8 befestigt ist.

Die Figuren 8 bis 10 zeigen weitere Möglichkeiten, wie Hohlprofilstangen 22 und 23 miteinander verbunden werden können.

Schliesslich ist es möglich, Hohlprofilstangen 22 und 23 an den Wandungen 6 und 7 zu befestigen. Hierbei können wiederum Nutensteine 27 verwendet werden, welche Durchbrüche 18 gemäss Figur 6 durchgreifen. Denkbar ist auch hier eine Befestigung mit Selbstbohrschrauben.

Die in Figur 1 gezeigte Höhe H des Verbinders 2 ist vorzugsweise gleich der in Figur 2 angegebenen Breite B der Hohlprofilstangen 22 und 23. Diese Hohlprofilstangen 22 und 23 sind im Querschnitt vorzugsweise quadratisch. Ist der Verbinder 1 beispielsweise gemäss Figur 2 mit zwei Hohlprofilstangen 22 und 23 verbunden, so sind die Wandungen 6 und 7 bündig mit den entsprechenden Aussenseiten der Hohlprofilstangen 22 und 23. Dies erleichtert in vielen Anwendungen die Beplankung, beispielsweise mit hier nicht gezeigten üblichen Gipskartonplatten. Diese Platten können in den Ausbildungen gemäss den Figuren 8 und 13 sowohl an die Hohlprofilstangen 22 und 23 als auch an die Wandungen 6 und 7 angelegt werden. Auch bei der Ausführung gemäss Figur 7 können die oberen Wandungen 6 und 7 als Auflagen für Beplankungselemente verwendet werden. Der Verbinder 1 ist gemäss Figur 7 in einer Ecke angeordnet, die durch zwei beispielsweise rechtwinklig zueinander verlaufende Gebäudewandungen 24 und 25 gebildet ist. Der Verbinder 1 verbindet zwei Hohlprofilstangen 22 und 23, die mit einer weiteren Hohlprofilstange 21 ein Dreieck eines Traggestells 32 bildet. Ein Beplankungselement wäre hierbei am Verbinder 1 und an der Hohlprofilstange 21 abgestützt. Der Verbinder 1 in der Figur 7 kann zudem an den Gebäudewandungen 24 und 25 befestigt sein, wobei hier beispielsweise Dübelschrauben durch die Öffnungen 11 hindurchgreifen. Bei einem Traggestell 32 gemäss Figur 7 können somit gleiche Verbinder 1 zum Verbinden von Hohlprofilstangen miteinander und zum Verbinden von Hohlprofilstangen mit einer Gebäudewand oder mit Beplankungselementen oder anderen Teilen verwendet werden. Der Verbinder 1 ist damit bei der Montage von Sanitärgestellen und insbesondere Traggestellen sehr vielfältig verwendbar. Als Montageprofile eignen sich insbesondere Hohlprofilstangen, die im Querschnitt viereckig sind und die eine Verankerung in einer Nut ermöglichen.

## Patentansprüche

1. Verbinder für die Befestigung von Montageprofilen (22, 23) der Sanitärtechnik, mit zwei schwenkbar miteinander verbundenen Verbindungslaschen (2), die jeweils Mittel (11, 12, 18) zu ihrer Befestigung an einem Montageprofil (22, 23) oder einer Gebäudewand (24, 25) aufweisen, **dadurch gekennzeichnet, dass** die beiden Verbindungslaschen (2) um eine gemeinsame Achse (4) scharnierartig miteinander verbunden sind und jeweils zwei Aussenseiten (14, 15) aufweisen, die rechtwinklig zueinander verlaufen und jeweils an ein Montageprofil (22, 23) anlegbar sind.

2. Verbinder nach Anspruch 1, **dadurch gekennzeichnet, dass** der Schwenkbereich der Verbindungslaschen (2) zueinander wenigstens 120°, vorzugsweise maximal etwa 150° beträgt.

3. Verbinder nach Anspruch 1 oder 2, **dadurch gekennzeichnet, dass** die beiden Verbindungslaschen (2) im Querschnitt etwa U-förmig sind.

4. Verbinder nach einem der Ansprüche 1 bis 3, **dadurch gekennzeichnet, dass** die Verbindungslaschen (2) jeweils Wandungen (6, 7) aufweisen, die sich quer zur Scharnierachse (S) erstrecken.

5. Verbinder nach einem der Ansprüche 1 bis 4, **dadurch gekennzeichnet, dass** die beiden Verbindungslaschen (2) im Wesentlichen gleich ausgebildet sind.

6. Verbinder nach einem der Ansprüche 1 bis 5, **dadurch gekennzeichnet, dass** die Verbindungslaschen (2) abgebogene Blechformteile sind.

7. Verbinder nach einem der Ansprüche 1 bis 6, **dadurch gekennzeichnet, dass** die Scharnierachse (S) im Abstand zu parallel zueinander verlaufenden Aussenkanten (K1, K2) der Verbindungslaschen (2) angeordnet ist, wobei diese Aussenkanten (K1, K2) parallel zur Scharnierachse (S) verlaufen.

8. Verbinder nach einem der Ansprüche 1 bis 7, **dadurch gekennzeichnet, dass** Wandungen (6, 7, 8, 9) Durchbrüche (11, 12, 18) für die Befestigung von Montageprofilen (22, 23) aufweisen.

9. Verbinder nach Anspruch 8, **dadurch gekennzeichnet, dass** die Durchbrüche (11, 12, 18) Langlöcher sind.

10. Verbinder nach einem der Ansprüche 1 bis 9, **dadurch gekennzeichnet, dass** die Verbindungslaschen (2) jeweils eine abgebogene Wandung (8) für eine stirnseitige Befestigung einer Hohlprofilstange (22, 23) aufweist.

11. Traggestell mit wenigstens einem Verbinder nach Anspruch 1, **dadurch gekennzeichnet, dass** der Verbinder (2) mit wenigstens einem als Hohlprofilstange ausgebildeten Montageprofil (22, 23) verbunden ist.

12. Traggestell nach Anspruch 11, **dadurch gekennzeichnet, dass** der Verbinder (2) mittels eines Nutensteins (27) mit dem Montageprofil (22, 23) verbunden ist.

13. Traggestell nach Anspruch 11, **dadurch gekennzeichnet, dass** der Verbinder (2) mit Selbstbohrschrauben mit dem Montageprofil (22, 23) verbunden ist.

14. Traggestell nach einem der Ansprüche 11 bis 13, **dadurch gekennzeichnet, dass** es eine dreieckige Grundform besitzt und für eine Raumecke (24, 25) vorgesehen ist.

## Claims

1. Connector for fixing mounting sections (22, 23) in sanitary technology, with two connecting tabs (2) connected to one another so that they can pivot, each with means (11, 12, 18) enabling them to be fixed to a mounting section (22, 23) or a building wall (24, 25), **characterised in that** the two connecting tabs (2) are connected to one another in a hinged arrangement about a common axis (4) and respectively have two external faces (14, 15) extending at a right angle to one another and which can each be fitted on a mounting section (22, 23).

2. Connector as claimed in claim 1, **characterised in that** the range within which the connecting tabs (2) are able to pivot with respect to one another is at least 120°, preferably a maximum of approximately 150°.

3. Connector as claimed in claim 1 or 2, **characterised in that** the two connecting tabs (2) are essentially U-shaped in cross-section.

4. Connector as claimed in one of claims 1 to 3, **characterised in that** the connecting tabs (2) respectively have walls (6, 7) which extend transversely to the hinge axis (S).

5. Connector as claimed in one of claims 1 to 4, **characterised in that** the two connecting tabs (2) are of an essentially identical design.

6. Connector as claimed in one of claims 1 to 5, **characterised in that** the connecting tabs (2) are bent-back sheet metal parts.

7. Connector as claimed in one of claims 1 to 6, **characterised in that** the hinge axis (S) is disposed at a distance from outer edges (K1, K2) of the connecting tabs (2) extending parallel with one another, and these outer edges (K1, K2) extend parallel with the hinge axis (S).

8. Connector as claimed in one of claims 1 to 7, **characterised in that** walls (6, 7, 8, 9) have orifices (11, 12, 18) for securing mounting sections (22, 23).

9. Connector as claimed in claim 8, **characterised in that** the orifices (11, 12, 18) are elongate slots.

10. Connector as claimed in one of claims 1 to 9, **characterised in that** the connecting tabs (2) each have a bent-back wall (8) for securing a hollow section bar (22, 23) by an end face.

11. Support frame with at least one connector as claimed in claim 1, **characterised in that** the connector (1) is connected to at least one mounting section (22, 23) in the form of a hollow section bar.

12. Support frame as claimed in claim 11, **characterised in that** the connector (1) is connected to the mounting section (22, 23) by means of a slot nut (27).

13. Support frame as claimed in claim 11, **characterised in that** the connector (1) is connected to the mounting section (22, 23) by means of self-tapping screws.

14. Support frame as claimed in one of claims 11 to 13, **characterised in that** it has a triangular base shape and is designed for a room corner (24, 25).

## Revendications

1. Dispositif de connexion pour la fixation de profilés de montage (22, 23) pour installations sanitaires, comprenant deux pattes de connexion (2) connectées l'une à l'autre de manière pivotante, qui présentent chacun des moyens (11, 12, 18) pour leur fixation sur un profilé de montage (22, 23) ou une paroi de bâtiment (24, 25), **caractérisé en ce que** les deux pattes de connexion (2) sont connectées l'une à l'autre à la façon d'une charnière autour d'un axe commun (4), et présentent chacune deux côtés extérieurs (14, 15), qui s'étendent à angle droit l'un par rapport à l'autre et qui peuvent être appliqués respectivement contre un profilé de montage (22, 23).

2. Dispositif de connexion selon la revendication 1, **caractérisé en ce que** la zone de pivotement des pattes de connexion (2) l'une par rapport à l'autre est d'au moins 120°, de préférence d'au plus environ 150°.

3. Dispositif de connexion selon la revendication 1 ou 2, **caractérisé en ce que** les deux pattes de connexion (2) ont chacune une section transversale approximativement en forme de U.

4. Dispositif de connexion selon l'une quelconque des revendications 1 à 3, **caractérisé en ce que** les pattes de connexion (2) présentent chacune des parois (6, 7) qui s'étendent transversalement à l'axe de la charnière (S).

5. Dispositif de connexion selon l'une quelconque des revendications 1 à 4, **caractérisé en ce que** les deux pattes de connexion (2) sont réalisées de manière substantiellement identique.

6. Dispositif de connexion selon l'une quelconque des revendications 1 à 5, **caractérisé en ce que** les pattes de connexion (2) sont des pièces moulées en tôle cintrée.

7. Dispositif de connexion selon l'une quelconque des revendications 1 à 6, **caractérisé en ce que** l'axe de charnière (S) est disposé à distance des arêtes extérieures (K1, K2) des pattes de connexion (2) s'étendant parallèlement l'une à l'autre, ces arêtes extérieures (K1, K2) s'étendant parallèlement à l'axe de charnière (S).

8. Dispositif de connexion selon l'une quelconque des revendications 1 à 7, **caractérisé en ce que** des parois (6, 7, 8, 9) présentent des orifices (11, 12, 18) pour la fixation de profilés de montage (22, 23).

9. Dispositif de connexion selon la revendication 8, **caractérisé en ce que** les orifices (11, 12, 18) sont des trous oblongs.

10. Dispositif de connexion selon l'une quelconque des revendications 1 à 9, **caractérisé en ce que** les pattes de connexion (2) présentent chacune une paroi cintrée (8) pour une fixation du côté frontal d'une barre profilée creuse (22, 23).

11. Bâti porteur comprenant au moins un dispositif de connexion selon la revendication 1, **caractérisé en ce que** le dispositif de connexion (2) est connecté à au moins un profilé de montage (22, 23) réalisé sous forme de barre profilée creuse.

12. Bâti porteur selon la revendication 11, **caractérisé en ce que** le dispositif de connexion (2) est connecté au profilé de montage (22, 23) au moyen d'un coulisseau (27).

13. Bâti porteur selon la revendication 11, **caractérisé en ce que** le dispositif de connexion (2) est connecté au profilé de montage (22, 23) au moyen de vis auto-taraudeuses.

14. Bâti porteur selon l'une quelconque des revendications 11 à 13, **caractérisé en ce qu'**il présente une forme de base triangulaire et qu'il est prévu pour un coin d'une pièce (24, 25).
